Europäisches Patentamt

European Patent Office

Office européen des brevets

(11) Veröffentlichungsnummer: **0 187 934**
**A2**

(12) ## EUROPÄISCHE PATENTANMELDUNG

(21) Anmeldenummer: 85115238.9

(22) Anmeldetag: 30.11.85

(51) Int. Cl.⁴: **B 23 K 26/08**

(30) Priorität: 17.12.84 DE 3445981

(43) Veröffentlichungstag der Anmeldung:
23.07.86 Patentblatt 86/30

(84) Benannte Vertragsstaaten:
**FR GB IT**

(71) Anmelder: **MESSER GRIESHEIM GMBH**
**Hanauer Landstrasse 330**
**D-6000 Frankfurt/Main 1(DE)**

(72) Erfinder: **Müller, Alfred, Dr.**
**Innsbrucker Strasse 63**
**D-8038 Gröbenzell(DE)**

(54) Einrichtung zum Bearbeiten von Werkstücken mit einem aus einem Laserkopf austretenden Laserstrahl.

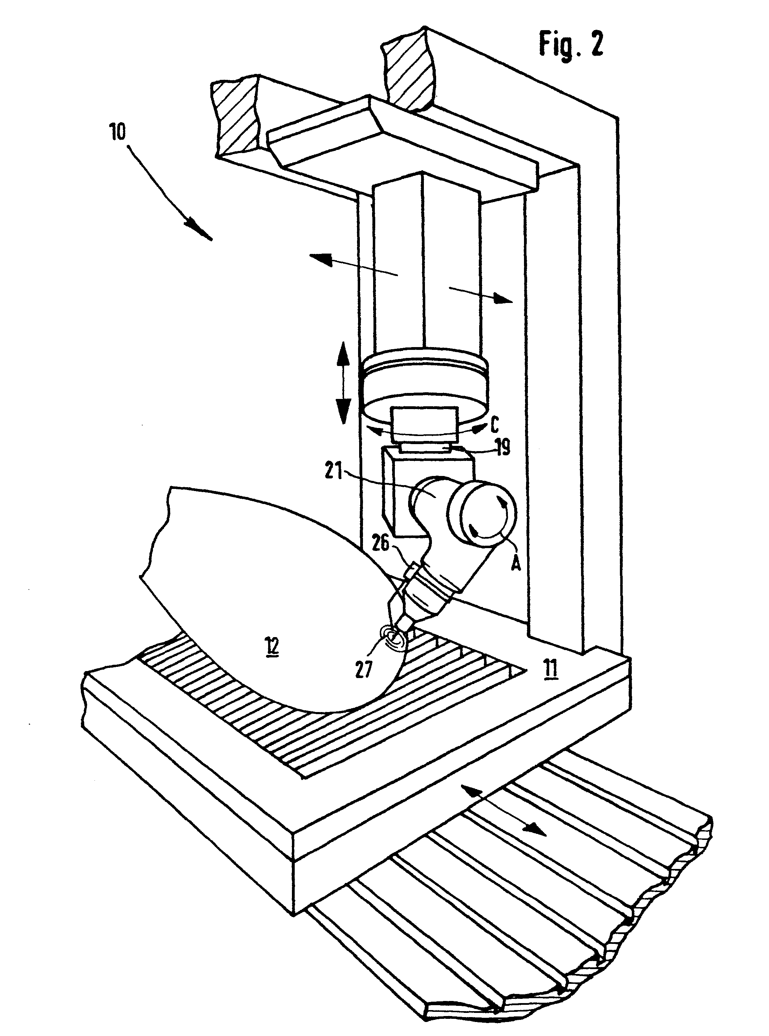

(57) Um bei einer Materialbearbeitung mit Laserstrahlen auf einem Werkstück- und Strahlmanipulator (10) mit mindestens drei programmgesteuerten Achsen X, Y, Z, A, C den Bauaufwand der Höhenabtasteinrichtung (26) gering zu halten, wird die Höhenabtasteinrichtung (26) direkt (one-line) an die NC-Steuerung angeschlossen (Figur 2).

Fig. 2

MESSER GRIESHEIM GMBH                    MG 1490

Kennwort: On-Line Höhensteuerung        EM 1119

Erfinder: Dr. Müller                     Ordner: XIX


Einrichtung zum Bearbeiten von Werkstücken mit einem aus einem Laserkopf austretenden Laserstrahl

Die Erfindung betrifft eine Einrichtung zum Bearbeiten von Werkstücken mit einem aus einem Laserkopf austretenden Laserstrahl nach dem Oberbegriff des Anspruchs 1.

Derartige Einrichtungen zum Bearbeiten von Werkstücken, insbesondere zum Schneiden oder Schweißen, denen eine Programmsteuereinheit zugeordnet ist, um den Laserkopf automatisch entlang einer vorgegebenen Bahn zu führen, werden zum Bearbeiten von dreidimensionalen räumlichen Konturen verwendet.

Aus dem Prospekt "Messer Griesheim Sonderdruck", Jahrgang 10/80, Qualitative und wirtschaftliche Aspekte des Schneidens mit $CO_2$-Laser, Seite 4 und 5 ist eine kapazitive Höhenabtasteinrichtung für das Laserschneiden bekannt, die einen Verstellantrieb steuert. Dieser Verstellantrieb besteht aus einem Gleichstrommotor und einer spielfreien Kugelspindel. Der Laserkopf wird mit einem kugelgeführten Schlitten innerhalb eines Verstellwegs von maximal 300 mm vertikal bewegt. Die gesamte Lasereinheit wird dabei von einer NC-Steuerung in zwei Achsen nach Programm verfahren.

Mit einer derartigen Lasereinrichtung können nur eingeschränkt dreidimensionale Konturen geschnitten werden. Der von der Höhenabtasteinrichtung gesteuerte Korrekturschlitten ist kostenintensiv und verschlechtert durch sein Gewicht die Nutzlast und die Dynamik der Lasereinrichtung.

Aus der DE-OS 30 11 244 ist eine Vorrichtung zum Beschneiden der Ränder von - und zur Anbringung von Durchbrüchen in dreidimensionalen hohlen Formteilen bekannt, wobei eine das dreidimensionale Formteil aufnehmende Stützform und/oder der Laserstrahlkopf eine programmgesteuerte dreidimensionale Relativbewegung ausführen. Hierbei ist es möglich, die Stützform entsprechend der Schnittführung unter dem feststehenden Laserkopf zu bewegen, oder den Laserstrahlkopf entsprechend der gewünschten Schneidkante bei feststehender Stützform zu führen.

Hat das dreidimensionale Formteil im Raum keinen gleichmäßigen Verlauf, oder entstehen aufgrund der Wärmeeinbringung in das Werkstück Veränderungen der Werkstückhöhe, so ist einerseits die Programmierung der unregelmäßig gekrümmten Bahn sehr aufwendig und andererseits werden Werkstückhöhenveränderungen durch Verzug während der Be-

...

arbeitung durch die Programmsteuerung nicht berücksichtigt. Dies führt insbesondere beim Schneiden von dreidimensionalen Formteilen zu fehlerhaften Schnitten.

Aus dem Messer Griesheim-Prospekt Nr. 47.5000, Jahrgang 05/84, Seite 16 und 20 ist es bekannt, einen fünfachsigen Werkstück-und Strahlmanipulator für die Laserbearbeitung mit einer Höhenabtasteinrichtung zu ergänzen.

Der Erfindung liegt die Aufgabe zugrunde, bei der Materialbearbeitung mit Laserstrahlen auf einem Werkstück- und Strahlmanipulator mit mindestens drei programmgesteuerten Achsen den Bauaufwand der Höhenabtasteinrichtung gering zu halten.

Diese Aufgabe wird bei einer gattungsgemäßen Einrichtung zum Bearbeiten von Werkstücken mit einem aus einem Laserkopf austretenden Laserstrahl durch die kennzeichnenden Merkmale des Anspruchs 1 gelöst.

Weiterbildungen der Erfindung sind in den Unteransprüchen angegeben.

Die durch die Erfindung erzielten Vorteile sind im wesentlichen darin zu sehen, daß durch die on-line-Eingabe der durch eine Höhenabtasteinrichtung,vorzugsweise einer kapazitiven Höhenabtasteinrichtung, ermittelten Abstandssignale in die NC-Steuerung vorteilhaft die Kosten und das Gewicht eines Korrekturschlittens eingespart werden. Durch die Einsparung des Korrekturschlittens wird die Nutzlast und die Dynamik der Einrichtung nach der Erfin-

...

dung verbessert. Ferner werden durch die on-line-Eingabe in die NC-Steuerung die Verfahrwege in den Achsrichtungen zur Korrektur vollständig genutzt.

Ein Ausführungsbeispiel der Erfindung ist in der Zeichnung dargestellt und wird im folgendem näher beschrieben.

Es zeigen:

Fig. 1    eine perspektivische Darstellung der Einrichtung nach der Erfindung;

Fig. 2    eine vergrößerte Darstellung der Bauteile Vertikalführung, Drehgelenk und Laserkopf mit Höhenabtasteinrichtung.

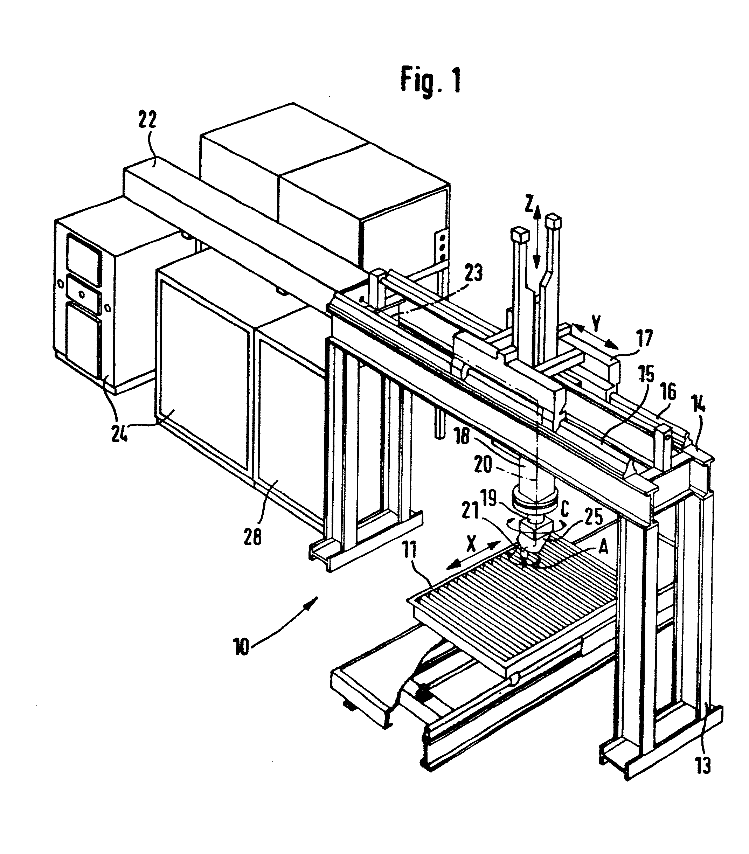

In Fig. 1 ist ein Werkstück- und Strahlmanipulator mit fünf Achsen in seiner Gesamtheit mit 10 bezeichnet. Die fünf Achsen werden dabei aus drei Linearachsen X,Y,Z und zwei Drehachsen A,C gebildet. Der Manipulator 10 besteht im wesentlichen aus einem Koordinatentisch 11, auf dem das Werkstück 12 (Fig. 2) in X-Richtung verfahrbar ist und einem den Koordinatentisch 11 überragenden Portal 13, das stationär angeordnet ist. Auf der Zweiträgerbrücke 14 des Portals 13 sind Fahrbahnen 15, 16 angeordnet, auf denen ein Wagen 17 in Y-Richtung verfahrbar ist. An dem Wagen 17 ist eine in ihrer Höhe in Z-Richtung über dem Werkstück 12 verfahrbare Vertikalführung 18 befestigt. An dem dem Werkstück 12 zugewandten Ende der Vertikalführung 18 ist ein in C-Richtung drehbares Drehgelenk 19 mit senkrechter Drehachse 20 angeordnet. An dem Drehgelenk 19 ist der Laserkopf 21 befestigt, der um eine senkrecht zur Drehachse 20 verlaufende Achse in A-Richtung schwenkbar ist.

...

Vorzugsweise fluchtend zur Zweiträgerbrücke 14 ist ein Laserresonator 22 angeordnet, in dem der Laserstrahl 23 erzeugt wird. Der Laserresonator 22 ist vorzugsweise über den Steuer- und Versorgungseinrichtungen 24 angeordnet.

Der aus dem Laserresonator 22 austretende Laserstrahl 23 wird über einen unter 45° angeordneten Spiegel in Z-Richtung umgelenkt und mittig durch die Vertikalführung 18 dem Laserkopf 21 zugeführt. Hierzu sind in dem Laserkopf 21 ebenfalls nicht näher dargestellte Spiegel angeordnet.

Koordinatentisch 11, Wagen 17, Vertikalführung 18, Drehgelenk 19 und Laserkopfschwenkvorrichtung 25 werden vorzugsweise mittels einer NC-Steuerung verfahren, wobei die Antriebsmotore aus Übersichtsgründen nicht näher dargestellt sind.

Fig. 2 zeigt eine vergrößerte Darstellung des Drehgelenkes 19 des Laserkopfes 21 und der Laserkopfschwenkvorrichtung 25. Vorzugsweise ist an dem Laserkopf 21 eine Höhenabtasteinrichtung 26 befestigt, mit der der Abstand zwischen Werkstück 12 und Fokus des Laserkopfes 21 konstant gehalten wird. Die Höhenabtasteinrichtung 26 weist vorzugsweise eine kapazitive Sensorelektrode 27 zur Erzeugung eines Abstandsignales auf. Die Höhenabtasteinrichtung 26 ist mit der NC-Steuerung 28 direkt (on-line) verbunden. Die Abstandskorrektur erfolgt dabei während der Bearbeitung in mindestens drei Achsen. Hierbei wird das in beliebiger räumlicher Richtung gemessene Abstandsignal zwischen Laserfokus und Werkstück 12 in die Korrekturachsen zerlegt und one-line den NC-Sollwerten bzw. der Istbewegung überlagert.

...

Ausgehend von einer programmierten oder per "Teach in" vorgegebenen Verfahrstrecke von einem Punkt D zu einem Punkt E kommt es entweder durch eine falsche Programmierung der Verfahrstrecke DE oder beispielsweise von einer Oberflächen- oder Konturabweichung zwischen mehreren Werkstücken 12 zu einer Abweichung der Verfahrstrecke DE zu einer wirklichen Soll-Verfahrstrecke DF. Die NC-Steuerung 28 arbeitet vorzugsweise als Bahnsteuerung, die zur Sicherstellung der Bewegung auf definierter Bahn nach Maßgabe des Programmes Geschwindigkeitsvektoren berechnet, mit denen die Bewegungsbahn des Laserfokus aus den Bewegungskomponenten der Achsen X, Y, Z, A, C mit der Geschwindigkeit als unabhängige veränderliche gebildet wird. Die Geschwindigkeitsvektoren werden mit einer bestimmten Frequenz (Interpolationsfrequenz) erneuert. Die Geschwindigkeitsvektoren für die Bewegung jeder Achse sind ständig aus der aktuellen Soll-Ist-Differenz des Weges abzuleiten. Hierzu sind den Geschwindigkeitsvektoren Lageregelkreise überlagert, die die Bahnsollkurve mit der gemessenen Istkurve vergleichen. Die Regelabweichung führt zu einer Korrektur des Geschwindigkeitsvektors.

Die Auswertung des Abstandssignals in der NC-Steuerung 28 führt ebenfalls zu einer Korrektur des Geschwindigkeitsvektors. Die sich durch diese Korrektur ergebenden Veränderungen der Lagekoordinaten werden bei der Berechnung der oben erwähnten Regelabweichung berücksichtigt. Dabei kann die Korrektur infolge des Abstandssignals mit der Interpolationsfrequenz (bei kleiner Frequenz) oder langsamer ablaufen. Vorzugsweise wird zur Vermeidung einer zu hohen Rechnerbelastung, d. h. um die Interpolationsfrequenz nicht unnötig zu verschlechtern, nur bei Bedarf oder mit relativ niedriger Frequenz korrigiert.

...

Vorteilhaft ist der Einsatz von zwei Rechnern möglich. Hierbei wird der erste Rechner (oder Microprozessor) im wesentlichen zum Wahrnehmen der eigentlichen NC-Aufgaben und der zweite Rechner zum Auswerten des Abstandssignals, d. h. Berechnung der Transformationen und Korrekturen, verwendet.

Die Datenübermittlung erfolgt hier entweder per Interrupt oder synchronisiert mit dem ersten Rechner.

Anschließend wird ein sehr einfacher Algorithmus zur Veranschaulichung angegeben, der keineswegs auf NC-Erfordernisse optimiert ist.

In diesem vereinfachten Beispiel wird davon ausgegangen, daß die NC-Steuerung 28 fehlerfrei arbeitet, d. h. der Geschwindigkeitsvektor genau auf der Sollbahn liegt und es keinerlei Regelabweichung aus dem normalen NC-Betrieb gibt.

$$\tan \alpha = \frac{z_i - z_{i-1}}{x_i - x_{i-1}}$$

V = Geschwindigkeitsvektor
V = Bahngeschwindigkeit

$$\vec{V} = \left\{ \begin{array}{c} V_x \\ V_z \end{array} \right\} = V \left[ \begin{array}{c} \cos \alpha \\ \sin \alpha \end{array} \right]$$

$$V = \sqrt{(V_x)^2 + (V_z)^2}$$

wirkliche Werkstückoberfläche
Interpolationsschritt

Bei V = const. und fester Interpolationsfrequenz sind hier die Interpolationsschritte äquidistant.

hier:  $z_1' = W_1$    $X_{2\,korrigiert} = X_2$  (wie aus prog.Bahn berechnet)

$Z_{2\,korrigiert} = Z_2 + z_1'$

0187934

$$\rightarrow \tan \alpha \rightarrow \vec{V}_2$$

$$Z_2' = W_2 \qquad X_{3\,korrigiert} = X_3$$

$$Z_{i\,korrigiert} = Z_i + \sum_{l=1}^{i-1} W_i \qquad \text{hier: } i=3$$

Vorzugsweise ist durch diese Höhen- oder Abstandsregelung (bei Vorhandensein geeigneter Sensoren, z. B. Sensoren, die das Wirbelstromprinzip ausnutzen) auch eine Normalen- oder Winkelregelung möglich, d. h. es können beispielsweise über die beiden Drehachsen A, C des Manipulators 10 Korrekturen erfolgen, so daß der Laserstrahl 23 das Werkstück 12 immer unter einem bestimmten Winkel, vorzugsweise aber senkrecht zur Oberfläche, trifft. Weiterhin kann die Einrichtung auch zur Lageregelung quer zur Schweißnaht ausgenutzt werden. Ein Sensor erfaßt die Abweichung quer zur Schweißnaht oder zu einer Stufe im Werkstück 12, die parallel zur Schweißnaht läuft, und die Korrektur erfolgt entsprechend. Je nach Anwendungsfall ändern sich die Transformationen zur Auswertung des Meßsignals.

Selbstverständlich sind auch andere Bauformen des Werkstück- und Strahlmanipulators möglich. So kann beispielsweise auch das Werkstück in mehrere Achsen bewegt werden.

Gr/Ha
EM 1119

<u>Ansprüche</u>

1. Einrichtung zum Bearbeiten von Werkstücken mit einem aus einem Laserkopf austretenden Laserstrahl, wobei der Laserstrahl und/oder das Werkstück mittels einer NC-Steuerung in mindestens drei Achsen zur Erzielung einer räumlichen Kontur bewegbar sind, wobei die Einrichtung eine Höhenabtasteinrichtung aufweist, dadurch gekennzeichnet, daß die Höhenabtasteinrichtung (26) direkt (on-line) an die NC-Steuerung (28) angeschlossen ist.

2. Einrichtung nach Anspruch 1, dadurch gekennzeichnet, daß die Höhenabtasteinrichtung (26) als kapazitive Höhensteuerung ausgebildet und am Laserkopf (21) befestigt ist.

3. Einrichtung nach einem der Ansprüche 1 bis 2, gekennzeichnet durch einen stationär angeordneten Laserresonator (22) und einen Strahlmanipulator (10) mit
   - einem stationären Portal (13), unter dem ein das Werkstück (12) tragender Werkstückmanipulator (11) in X-Richtung verfahrbar ist,
   - einem Wagen (17) der auf dem Portal (13) in Y-Richtung verfahrbar ist,
   - einer Vertikalführung (18) die in ihrer Höhe in Z-Richtung über dem Werkstück (12) verfahrbar am Wagen befestigt ist,
   - einem am Ende der Vertikalführung (18) angeordneten in C-Richtung drehbaren Drehgelenk (19) mit senkrechter Drehachse (20),

...

- 2 -

0187934

- einem am Drehgelenk (19) befestigten Laserkopf (21),
  der um eine senkrecht zur Drehachse verlaufenden Achse
  in A-Richtung schwenkbar ist

und ferner

- durch eine Höhenabtasteinrichtung (26), mit der die programmierten Achsen (X,Y,Z,A,C) entsprechend einem Höhensignal zur Erzielung eines konstanten Abstandes zwischen
  Laserkopf (21) und Werkstück (12) korrigierbar sind.

4. Einrichtung nach einem der Ansprüche 1 bis 3,
   dadurch gekennzeichnet,
   daß das Ausgangssignal der Höhenabtasteinrichtung (26)
   während der Bearbeitung in mindestens drei Achsen in Korrekturachsensignale zerlegbar und on-line den NC-Sollwerten
   bzw. der Laserkopfistbewegung überlagerbar ist.

Gr/Ha
EM 1119

# Fig. 1

MESSER GRIESHEIM GMBH

0187934

Fig. 2